# FASCICULE DE BREVET EUROPEEN

(11) **EP 2 715 274 B1**
(45) Date de publication et mention de la délivrance du brevet: **22.04.2020**
(21) Numéro de dépôt: 12728698.7
(22) Date de dépôt: 15.05.2012
(51) Int. Cl.: G01B 5/20, G01B 11/24, F01D 5/00, F01D 5/14, F01D 25/28, F04D 29/32, G01B 3/14, G01B 3/04, B25H 3/02

(54) **PROCEDE DE MESURE D'UNE PIECE DANS UNE TURBOMACHINE**
VERFAHREN ZUM MESSEN EINES TEILS IN EINER TURBOMASCHINE
METHOD FOR MEASURING A PART IN A TURBOMACHINE

(30) Priorité: 27.05.2011 FR 1154677
(43) Date de publication de la demande: 09.04.2014
(73) Titulaire: Safran Aircraft Engines, 75015 Paris (FR)
(72) Inventeur: BARTHELEMY, Denis, F-77550 Moissy Cramayel Cedex (FR); ROSSIO, Jean-Dominique, F-77550 Moissy Cramayel Cedex (FR); MONNIER, Eric, F-77550 Moissy Cramayel Cedex (FR); PAGLIANO, François, F-77550 Moissy Cramayel Cedex (FR); MARTIN, Pierre, Albert, Marie, F-77340 Pontault-Combault (FR)
(74) Mandataire: Jolly, Christophe
(86) Numéro de dépôt international: PCT/FR2012/051090
(87) Numéro de publication internationale: WO 2012/164192

(56) Documents cités:
- WO-A1-2010/055263
- JP-A- 58 068 601
- US-A- 4 825 259
- US-A- 5 803 680
- US-A1- 2004 148 793
- US-B1- 6 459 481

## Description

Le présent document concerne un procédé et un dispositif de mesure d'une pièce dans une turbomachine, telle qu'un turboréacteur d'avion. L'invention est définie dans les revendications 1 à 11.

Classiquement, une turbomachine comprend des compresseurs basse pression et haute pression alimentant en air une chambre de combustion et des turbines basse pression et haute pression situées en aval. Chaque compresseur et chaque turbine comprennent une alternance de redresseurs fixes et de roues mobiles équipées d'aubes entourées par un carter.

En fonctionnement, il arrive que de la glace ou des corps étrangers pénètrent à l'intérieur de la turbomachine et viennent impacter les aubes des compresseurs. Les sommets d'aubes ainsi que les bords d'attaque et les bords de fuite des aubes sont particulièrement sujets à une déformation suite à un impact puisque ces zones sont fines par rapport au reste de l'aube.

Dans le cadre de la maintenance d'une turbomachine, les compagnies aériennes doivent réaliser des opérations de contrôle non destructif visant à mesurer la déformation des zones précitées. En effet, une déformation de ces zones peut être particulièrement critique pour le bon fonctionnement d'une turbomachine puisque cela se traduit par une perturbation de l'écoulement d'air circulant à l'intérieur du compresseur, conduisant à une réduction du taux de compression du compresseur, une diminution des performances de la turbomachine et une diminution de la marge d'opérabilité de la turbomachine.

Cette inspection est réalisée au moyen d'un endoscope qui est un instrument optique allongé formé d'un tube logeant des moyens optiques de transmission d'images depuis son extrémité distale jusqu'à un moyen de visualisation.

Cet endoscope est introduit dans la turbomachine à travers un orifice endoscopique formé dans le carter entre deux aubes de redresseur. L'extrémité distale de l'endoscope est orientable de manière à pouvoir être positionnée en regard de la zone à contrôler.

En particulier, la zone de jonction du sommet d'une aube avec son bord d'attaque est une zone qu'il convient de contrôler régulièrement. Cette zone de jonction sera dénommée coin amont d'aube dans la suite de la description. La mesure de la déformation du coin amont d'aube est réalisée sur une image du coin amont d'aube. L'opérateur effectue sur l'image une mesure de la distance entre le début de la déformation sur le bord d'attaque de l'aube et l'extrémité radialement externe du bord d'attaque de l'aube.

Cette mesure n'est toutefois pas satisfaisante puisque l'on ne connaît pas la position de l'extrémité distale de l'endoscope par rapport au bord d'attaque de l'aube. De plus, l'angle de visée de l'endoscope est également inconnu. Cet angle de visée est formé entre l'axe d'observation de l'extrémité distale de l'endoscope et un plan passant par l'axe du compresseur et par le bord d'attaque de l'aube. Ceci conduit à surestimer ou sous estimer la déformation du coin amont de l'aube de rotor.

Dans le cas d'une surestimation, cela conduit à une dépose anticipée de la turbomachine en atelier de maintenance pour effectuer le remplacement de la ou des aubes déformées, ce qui augmente les coûts d'exploitation de la turbomachine. Une sous estimation de la déformation du coin amont d'aube peut conduire à un incident lors du fonctionnement de la turbomachine. La circulation d'air parasite en sommets d'aubes peut conduire au pompage du compresseur, c'est-à-dire à une inversion de l'écoulement du flux d'air dans le compresseur, et à l'introduction dans le compresseur de flammes issues de la chambre de combustion, qui peuvent endommager le compresseur et dans des cas très critiques entrainer un arrêt de la turbomachine.

Une autre difficulté liée à l'utilisation des endoscopes est leur faible angle solide d'observation qui ne permet pas une observation des défauts au-delà de 40 millimètres (mm) alors qu'une déformation du coin amont d'aube peut s'étendre sur plus de 100 mm.

Pour améliorer la précision de la mesure de la déformation du coin amont des aubes de rotor, une méthode consiste à utiliser un repère visuel placé sur la face d'extrados de l'aube à proximité immédiate du coin amont de l'aube. Ce repère visuel se présente sous la forme d'une marque à l'encre, tel qu'un tampon, apposée lors de la fabrication de l'aube. Ainsi, lorsqu'un opérateur observe l'aube à l'aide de l'endoscope, il dispose d'un repère visuel sur l'aube qui lui permet de mieux estimer les dimensions de la déformation du coin amont d'aube en comparant la dimension de la marque avec les dimensions de la déformation du coin amont d'aube. Toutefois, du fait de l'érosion et des contraintes de fonctionnement à l'intérieur du compresseur haute pression, cette marque à l'encre disparaît progressivement au cours du fonctionnement de la turbomachine. De plus, la mesure des dimensions de la déformation d'un coin amont d'aube à l'aide de ce repère visuel s'avère peu précise du fait de l'impossibilité à localiser le début de la déformation le long du bord d'attaque de l'aube et le long du sommet d'aube.

Le document US 6,459,481B1 décrit un dispositif de mesure en trois dimensions comprenant plusieurs points de référence vu par une caméra selon plusieurs positions.

Le document US 4,825,259A décrit un adapteur monté à l'extrémité distale d'un boroscope.

Le document US 2004/0148793 décrit un masque dimensionné et conformé selon une partie d'une aube et comprend des ouvertures positionnées sur le masque à des endroits correspondant à des zones sur l'aube au niveau desquelles des défauts sont généralement présents. Les ouvertures ont des dimensions calibrées sur des valeurs maximales acceptables de dimensions de défauts.

Le document US 5,803,680 décrit un instrument dont une extrémité est destinée à être introduite dans une cavité de manière à venir se positionner au voisinage d'un défaut. L'extrémité distale de l'instrument est interchangeable entre un outil d'usinage et des moyens d'observation du défaut comportant une grille calibrée pour évaluer les dimensions du défaut.

Le document WO2010/055263 décrit un procédé de détermination de l'usure du bord d'attaque d'une pale rotative dans un moteur d'avion au moyen d'une marque positionnée sur le bord d'attaque. Une observation au moyen d'un endoscope permet d'évaluer la position des marques par rapport au bord d'attaque lors d'opérations de contrôle non destructif.

Le document JP 58068601 décrit une tige courbée de la même manière qu'une pièce à contrôler.

L'invention a notamment pour but d'apporter une solution simple, économique et efficace à ces problèmes, permettant d'éviter les inconvénients de la technique connue.

A cette fin, elle propose un procédé de mesure de la déformation d'une pièce dans une turbomachine au moyen d'un dispositif comprenant une tige dont une partie a un profil qui correspond au profil d'une partie d'une pièce d'étalonnage de même type que la pièce examinée, ladite partie de la tige comprenant en outre des repères visuels de mesure de distance agencés sur sa longueur, caractérisé en ce qu'il consiste à :
a) contrôler le profil de la tige dans les trois dimensions à l'aide d'un modèle tridimensionnel du profil de la partie de la pièce d'étalonnage ;
b) engager la tige dans un orifice d'endoscopie d'un carter de la turbomachine ;
c) positionner et fixer la partie conformée de la tige sur la partie de la pièce à contrôler correspondant à la partie de la pièce d'étalonnage
d) introduire un endoscope à l'intérieur du carter de la turbomachine ;
e) mesurer la déformation de la partie de la pièce à contrôler à l'aide de l'endoscope, puis à
f) retirer la tige de l'intérieur de la turbomachine et effectuer de nouveau l'étape a) pour vérifier qu'elle n'a pas subi de déformation lors de l'étape b).

Selon l'invention, le procédé utilise un dispositif dans lequel une partie d'une tige a une forme qui correspond à la forme d'une partie d'une pièce d'étalonnage identique à la pièce à contrôler. De cette manière, l'opérateur peut positionner la partie conformée de la tige à proximité de la partie de la pièce à contrôler et déterminer l'étendue de la déformation le long de ladite partie au moyen des repères visuels de mesure de distance agencés le long de la partie conformée de la tige.

Pour le contrôle d'un bord d'attaque dans une turbomachine, la tige comprend une partie conformée selon le bord d'attaque. La tige est insérée à l'intérieur de la turbomachine au travers d'un orifice d'examen prévu à cet effet dans un carter entourant les aubes. La tige est positionnée sur le bord d'attaque et les repères visuels de la partie conformée de la tige permettent d'évaluer la position de la déformation le long du bord d'attaque ainsi que son étendue.

Pour le contrôle d'un sommet d'aube mobile, on effectue la même opération que décrite au paragraphe précédent avec une tige comportant une partie conformée selon le sommet d'une aube mobile d'étalonnage.

A la différence de la technique antérieure, la mesure est totalement indépendante du positionnement de l'endoscope par rapport à la partie dont on souhaite mesurer la déformation.

Les étapes de contrôle initial et final de la forme de la tige permettent de garantir que la mesure de la déformation effectuée sur la partie de la pièce a été effectuée avec une tige dont la forme correspond bien à celle de la partie de la pièce d'étalonnage.

Lorsque la pièce est une aube de rotor dans une turbomachine, le procédé est exécuté successivement sur deux parties de l'aube dont l'une est le bord d'attaque et l'autre le sommet de l'aube.

La réalisation d'une mesure le long du bord d'attaque d'une aube permet d'avoir une information sur l'étendue de la déformation selon la hauteur de l'aube et la réalisation d'une mesure le long du sommet d'une aube permet d'avoir une information sur l'étendue de la déformation selon la dimension longitudinale ou largeur de l'aube. On obtient ainsi deux mesures indépendantes et précises sur l'étendue de la déformation du coin amont d'aube. Chaque mesure est également plus précise que la mesure effectuée dans la technique antérieure puisqu'elle est réalisée avec une tige ayant une partie conformée selon le bord à étudier et intègre des repères visuels sur sa longueur.

Selon une autre caractéristique de l'invention, les repères visuels de mesure de distance comprennent des graduations régulièrement réparties sur la longueur de la partie conformée de la tige.

Avantageusement, chaque graduation est réalisée sous la forme d'un trait coloré dont la couleur diffère de celle de chacun des traits colorés adjacents. L'intégration de graduations colorées facilite la mesure de la déformation puisqu'il est plus facile de distinguer deux graduations colorées différentes que des graduations voisines de même couleur. Ceci est particulièrement vrai lors de la mesure d'une déformation le long du sommet d'une aube. En effet, dans ce cas, l'extrémité distale d'un endoscope inséré à l'intérieur de la turbomachine est positionnée de manière sensiblement rasante par rapport à la partie conformée de la tige du fait du faible espacement disponible en sommet d'aube. L'intégration de graduations colorées facilite beaucoup la mesure de la déformation.

Selon une autre caractéristique de l'invention, le dispositif utilisé avec le procédé comprend des moyens de fixation et de positionnement de ladite partie de la tige en position fixe et alignée avec la partie de la pièce examinée correspondant à la partie de la pièce d'étalonnage.

Lorsque la pièce est une aube de rotor agencée à l'intérieur d'un carter de turbomachine, les moyens de fixation et de positionnement comprennent un embout engagé sur l'extrémité de la tige opposée à la partie précitée de la tige, l'embout étant destiné à être fixé dans un orifice endoscopique du carter de la turbomachine et comprenant un orifice de passage d'un endoscope.

Les moyens de positionnement comprennent un rebord ou crochet agencé à l'extrémité libre de la partie conformée de la tige et servant de butée de positionnement de la tige sur la pièce examinée.

Lorsque la partie à contrôler est un bord d'attaque d'aube de rotor, la tige ayant une partie conformée selon le bord d'attaque de l'aube est insérée à l'intérieur de la turbomachine et on fait tourner le rotor jusqu'à ce que le rebord vienne au contact de l'extrados de l'aube, ce qui correspond à un alignement correct de la partie conformée de la tige avec le bord d'attaque.

Dans une réalisation particulière de l'invention, la partie conformée est raccordée à une seconde partie de tige en L. Cette seconde partie en L sert à l'insertion et à l'amenée de la partie conformée de la tige jusqu'au bord à examiner de l'aube.

Dans une forme de réalisation de l'invention, la partie conformée de la tige suit le profil du sommet d'une aube de rotor et est inclinée par rapport à l'axe de la branche à laquelle elle est raccordée. Cette tige est particulièrement bien adaptée à la mesure de la déformation d'un sommet d'aube. L'inclinaison de la partie conformée est nécessaire puisque les sommets d'aubes sont en général inclinés par rapport à l'axe du rotor du compresseur de la turbomachine.

Dans une autre forme de réalisation de l'invention, la partie conformée de la tige suit le profil du bord d'attaque d'une aube de rotor et s'étend sensiblement perpendiculairement à la branche du L à laquelle elle est raccordée et dans une direction opposée à l'autre branche du L. Cette tige est particulièrement bien adaptée à la mesure de la déformation d'un bord d'attaque d'aube.

Le présent document concerne également un dispositif pour la mise en œuvre du procédé décrit précédemment, le dispositif comprenant une tige dont une partie a un profil qui correspond au profil d'une partie d'une pièce d'étalonnage de même type que la pièce examinée, ladite partie de la tige comprenant en outre des repères visuels de mesure de distance agencés sur sa longueur, le dispositif comprenant de plus des moyens de fixation et de positionnement de ladite partie de tige en position fixe et alignée avec la partie de la pièce examinée correspondant à la partie de la pièce d'étalonnage.

Le présent document concerne également une mallette pour le transport du dispositif décrit ci-dessus. Cette mallette comprend des moyens de support d'au moins une tige, ces moyens comprenant plusieurs plots supportant chacun la tige à une hauteur prédéterminée de manière à ce que les points de contact des plots de support avec la tige définissent un modèle tridimensionnel du profil de la partie de la pièce d'étalonnage.

Avec une telle mallette, il est possible de vérifier que la tige n'a pas été déformée lors de son utilisation en la reposant dans la mallette et en contrôlant que la tige est en contact avec chacun des plots de support.

D'autres avantages et caractéristiques de l'invention apparaîtront à la lecture de la description suivante faite à titre d'exemple non limitatif et en référence aux dessins annexés dans lesquels :
- la figure 1 est une demi-vue schématique partielle en coupe axiale d'un compresseur haute pression d'un type connu ;
- la figure 2 est une vue schématique partielle et en perspective illustrant l'utilisation d'un endoscope de visualisation d'un bord d'une aube du compresseur de la figure 1 ;
- la figure 3 est une vue schématique en perspective d'une tige du dispositif utilisé dans le procédé selon l'invention, comportant une partie conformée selon un sommet d'une aube de rotor de compresseur haute pression ;
- la figure 4 est une vue schématique en perspective partielle et en perspective de la tige de la figure 3 insérée à l'intérieur d'un compresseur haute pression ;
- la figure 5 est une vue schématique en perspective du dispositif utilisé dans le procédé selon l'invention inséré à l'intérieur d'un compresseur haute pression pour la mesure de la déformation du bord d'attaque d'une aube;
- la figure 6 est une vue schématique en perspective des tiges des figures 4 et 5 logées dans une mallette de transport ;
- la figure 7 est une vue de dessus de la mallette ;
- la figure 8 est une vue schématique selon le plan de coupe AA de la figure 7 ;
- la figure 9 est une vue schématique selon le plan de coupe BB de la figure 7 ;
- la figure 10 est un organigramme des différentes étapes du procédé selon l'invention.
- les figures 11 à 15 représentent différentes utilisations du dispositif utilisé dans le procédé selon l'invention.

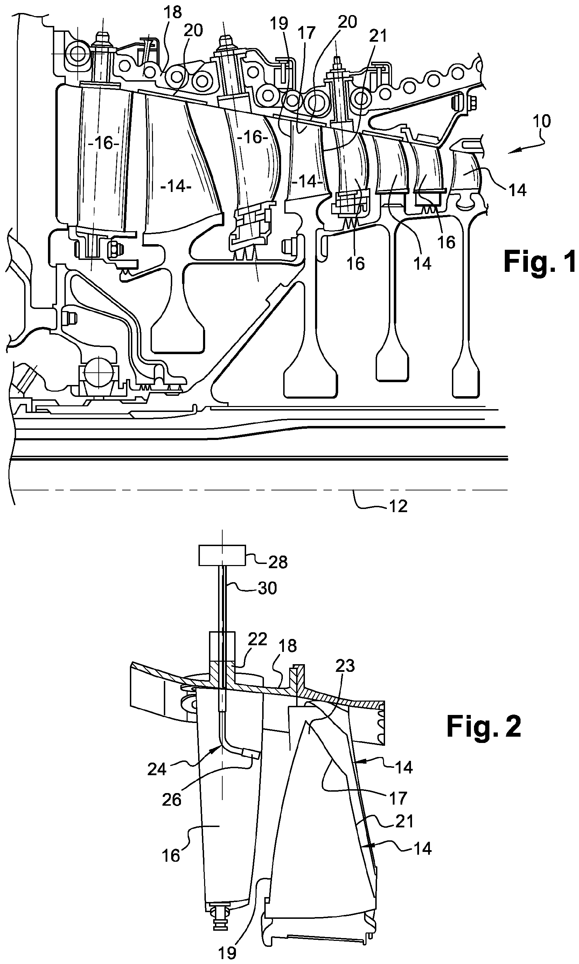

On se réfère tout d'abord à la figure 1 qui représente la partie amont d'un compresseur haute pression 10, vue en coupe selon un plan passant par l'axe de rotation 12 de la turbomachine. Le compresseur haute-pression 10 comprend plusieurs roues équipées d'aubes 14 et assemblés axialement les unes aux autres et disposées en alternance avec des aubes de redresseurs 16 portées par un carter 18. Chaque aube de compresseur 14 comprend un sommet d'aube 17 reliant un bord d'attaque 19 amont à un bord de fuite aval 21.

Des panneaux de matière abradable 20 sont agencés au droit des sommets des aubes de rotor 14. Ces panneaux de matière abradable 20 servent à limiter le passage d'air parasite entre les sommets des aubes 14 et le carter externe 18.

En fonctionnement, de la glace ou des corps étrangers peuvent venir impacter les aubes 14 et en particulier leurs coins amont, c'est-à-dire les zones de jonction 23 entre les bords d'attaque 19 et les sommets 17 des aubes (figure 2). Ces impacts peuvent déformer ces coins d'aubes 23 et induire une perturbation du débit d'air circulant entre les aubes 14 d'une même rangée et entre les sommets 17 des aubes 14 et le carter 18.

On cherche à limiter ces perturbations d'air, qui induisent une diminution de la puissance de la turbomachine, une augmentation de la consommation de carburant, et expose la turbomachine à des risques de pompage du compresseur, c'est-à-dire à une inversion de l'écoulement du flux d'air dans celui-ci.

Lorsque l'on suspecte des déformations des coins amont d'aubes, on est donc amené à effectuer une opération de maintenance de manière à vérifier l'existence ou non de ces déformations et le cas échéant à les quantifier afin de déterminer s'il est nécessaire ou non d'effectuer une dépose de la turbomachine pour réaliser un remplacement des aubes endommagées.

Pour ce contrôle in situ des aubes, le carter externe 18 du compresseur haute pression 10 comprend un bossage 22 par rangée d'aubes de redresseur 16 (figure 2). Chaque bossage 22 comprend un orifice de passage d'un endoscope 24, qui débouche à l'intérieur du carter 18 entre deux aubes de redresseur 16 consécutives.

L'endoscope 24 comprend des moyens optiques de transmission d'images depuis son extrémité distale 26 jusqu'à un oculaire d'observation 28 agencé à son extrémité proximale 30. L'endoscope 24 peut comprendre également des moyens de réglage de l'orientation de son extrémité distale. De tels moyens sont bien connus de l'homme du métier.

Pour l'observation d'un coin amont d'aube 23, l'opérateur introduit l'extrémité distale 26 de l'endoscope 24 dans l'orifice endoscopique de la rangée d'aubes de redresseur 16 immédiatement en amont de l'aube de rotor 14 à examiner. L'extrémité distale 26 de l'endoscope est ensuite dirigée vers l'aval de manière à visualiser le coin amont de l'aube 14 à examiner.

L'opérateur prend ensuite une image du coin amont de l'aube 23 et mesure la distance entre le début de la déformation sur le bord d'attaque de l'aube et l'extrémité radialement externe du bord d'attaque de l'aube. Il mesure également la distance entre le début de la déformation sur le sommet de l'aube et l'extrémité amont du sommet d'aube.

Comme expliqué précédemment, cette mesure s'avère très imprécise puisque le positionnement de l'extrémité distale de l'endoscope 24 par rapport à la zone déformée le long du bord d'attaque et le long du sommet de l'aube 17 n'est pas connu avec précision, ce qui introduit une erreur importante sur la valeur de la déformation ainsi mesurée.

L'invention apporte une solution simple aux problèmes de la technique antérieure grâce à une tige 32 dont une partie 34 est conformée de manière à avoir un profil qui correspond au profil d'une partie d'une pièce d'étalonnage de même type que la pièce examinée, des moyens de mesure de distance étant intégrés à la partie conformée 34 de la tige 32.

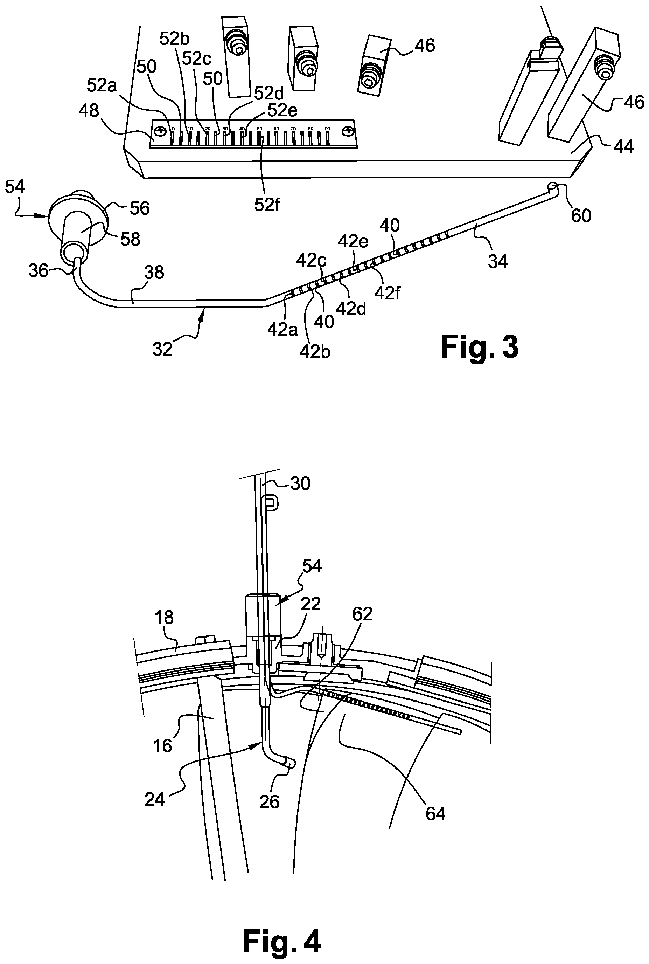

Dans une première forme de réalisation selon le procédé de l'invention, la tige comprend une partie conformée 34 selon le sommet d'une aube d'étalonnage. La tige 32 comprend une partie en L formée d'une première branche 36 et d'une seconde branche 38 (figure 3). L'extrémité de la seconde branche 38 opposée à la première branche 36 est reliée à la partie conformée 34 selon le profil du sommet 17 d'une aube d'étalonnage. La partie conformée 34 forme un angle non nul avec la seconde branche. Cet angle est déterminé pour correspondre sensiblement à l'angle formé entre le sommet d'aube 17 et l'axe longitudinal 12 du compresseur de la turbomachine.

La partie conformée 34 de la tige 32 comprend des graduations régulièrement espacées les unes des autres sur sa longueur. Chaque graduation est réalisée sous la forme d'un trait coloré dont la couleur diffère de celles des traits colorés adjacents. Sur la figure 3, la partie conformée comprend une pluralité de traits blancs 40 régulièrement espacés les uns des autres et entre lesquels sont intercalés des seconds traits 42 de couleurs différentes. Ces seconds traits définissent un motif répétitif le long de la partie conformée et au sein duquel les couleurs sont différentes deux à deux. Par exemple, le motif répétitif de couleurs peut être le suivant : jaune 42a, marron 42b, vert 42c, rouge 42d, bleu 42e, noir 42f.

Sur la figure 3 est également partiellement visible une plaque 44 comportant une pluralité de plots 46 qui constituent un modèle de forme permettant un contrôle de la forme de la tige. Ces plots 46 seront décrits plus en détail dans la suite de la description.

Une lame métallique 48 est fixée sur la plaque 44 et est graduée selon un code de couleurs identique à celui de la partie conformée de la tige. Ainsi, la lame métallique comprend des traits de couleur blanche 50 et des traits de couleurs différentes 52 intercalés entre les traits de couleur blanche. Les traits 52a, 52b, 52c, 52d, 52e, 52f définissent un motif identique à celui de la partie conformée 34 de la tige.

Une échelle de longueur est agencée le long de la lame en regard des traits 52.

Dans une réalisation pratique du procédé, les traits de couleurs 40, 42 et 50, 52 sont espacés les uns des autres d'une distance de 5 millimètres.

La tige comprend des moyens de fixation et de positionnement de la partie conformée 34 en position fixe alignée avec le sommet d'aube 17. Ces moyens comprennent un embout 54 comportant une partie annulaire 56 en saillie à l'extrémité d'une partie tubulaire 58. Un orifice est formé dans l'épaisseur de la paroi de la partie tubulaire 58 pour recevoir la première branche 36 de la partie en L de la tige 32, l'extrémité libre de la partie tubulaire 58 étant située du côté du raccordement entre les deux branches 36, 38 du L.

Les moyens de positionnement comprennent un rebord ou crochet 60 formé à l'extrémité libre de la partie conformée 34, ce rebord 60 étant destiné à venir en butée sur le bord de fuite 21 de l'aube 14. Ce rebord 60 est sensiblement perpendiculaire à l'extrémité libre de la partie conformée 34 et s'étend en direction circonférentielle lorsque la partie conformée 34 de la tige 32 est alignée avec le sommet 17 d'une aube de rotor 14.

La figure 4 représente le dispositif de la figure 3 avec la partie conformée 34 alignée avec le sommet 17 d'une aube de rotor 14. Sur cette figure, le coin amont est représenté sans déformation en 62 et avec déformation en 64.

En utilisation, la partie conformée 34 est insérée à travers l'orifice endoscopique de la rangée d'aubes fixes immédiatement en amont de l'aube de rotor à examiner. La partie tubulaire 58 est introduite dans l'orifice endoscopique du carter et la partie annulaire 56 de l'embout 54 vient en butée radiale sur la périphérie externe du bossage 22 du carter. Le positionnement de l'embout 54 sur la première branche 36 du L permet de contrôler le niveau d'insertion radiale de la partie conformée 34 à l'intérieur du carter 18. Lorsque l'embout 54 est en butée sur le bossage 22, il assure un positionnement et un blocage de la tige 32 à l'intérieur du carter 18. La partie en L de la tige permet un placement de la partie conformée 34 entre deux roues à aubes 14. Le rotor est ensuite légèrement tourné de manière à ce que la partie conformée 34 soit alignée avec le sommet d'aube 17, le rebord 60 de l'extrémité de la partie conformée 34 venant en butée sur le bord de fuite 21 de l'aube 14 (figure 4).

Un endoscope 24 du type décrit en référence à la figure 2 est introduit dans la partie tubulaire 58 de l'embout 54 et son extrémité distale est orientée vers l'aval en direction du coin amont déformé 64 de l'aube 14.

La mesure de l'étendue de la déformation est faite de la manière suivante : l'opérateur prend une image de la zone déformée et détermine au niveau de quels traits de couleur débute la déformation du coin amont d'aube 64. En utilisant la lame à code de couleurs, décrite précédemment, on en déduit la longueur de la déformation du coin amont d'aube 64 dans la direction du sommet d'aube.

A la différence de la technique antérieure, l'orientation de l'endoscope d'observation 24 par rapport au coin amont d'aube n'influence pas la mesure de la déformation puisque la partie conformée 34 est alignée avec le sommet d'aube 17, au plus de près de celui-ci et intègre des repères visuels de mesure de distance sur sa longueur.

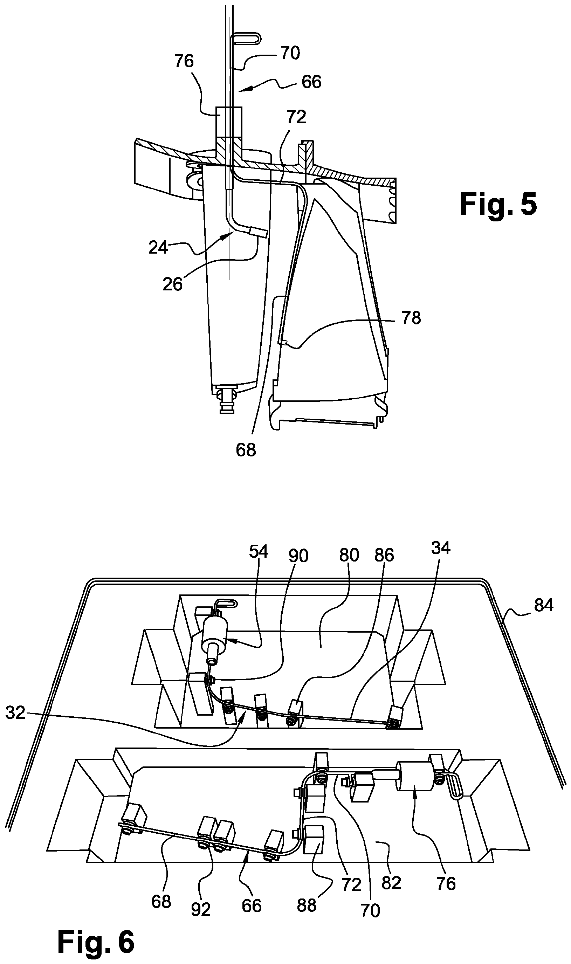

La figure 5 représente une tige 66 comprenant une partie conformée 68 selon le bord d'attaque 19 d'une aube de rotor 14. Comme la tige 32 décrite en référence aux figures 3 et 4, la tige 68 comprend deux branches 70, 72 en L. La partie conformée 68 est raccordée à la partie en L sensiblement perpendiculairement à la seconde branche 72 du L et s'étend dans la direction opposée à la première branche 70. La première branche 70 du L est également montée sur un embout 76 de positionnement et de blocage radial de la partie conformée 68 de la tige à l'intérieur du carter.

L'extrémité libre de la partie conformée 68 de la tige 66 comprend un rebord 78 sensiblement perpendiculaire qui s'étend sensiblement dans la même direction que la deuxième branche 72 du L. En position de montage de la tige à l'intérieur du carter, le rebord 78 s'étend vers l'aval et est sensiblement aligné avec l'axe 12 du compresseur haute pression 10.

Lorsque la tige 66 est insérée à l'intérieur du carter 18, le rotor est tourné de manière à ce que le rebord 78 de l'extrémité libre de la partie conformée 68 vienne en appui sur le bord d'attaque de l'aube 14, ce qui facilite l'alignement de la partie conformée 68 avec le bord d'attaque 19 de l'aube 14.

La mesure de la déformation de l'extrémité radialement externe du bord d'attaque 19 est réalisée en déterminant le trait au niveau duquel débute la déformation sur le bord d'attaque 19 de l'aube 14. Pour cela, l'opérateur prend une image de la zone déformée et détermine au niveau de quel trait de couleur débute la déformation du coin amont d'aube 64. En utilisant la lame à code de couleurs, décrite précédemment, on en déduit la hauteur de la déformation du coin amont d'aube 64 le long du bord d'attaque de l'aube.

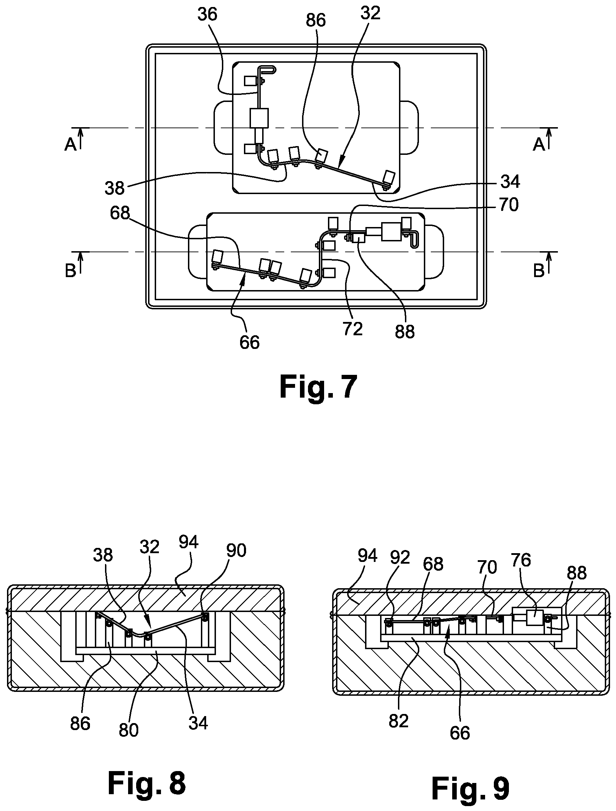

Les figures 6 et 7 concernent également une mallette pour le transport de la tige 32 conformée selon le sommet d'aube 17 et de la tige 66 conformée selon le bord d'attaque 19. Cette mallette comprend des moyens de support des tiges 32, 66. Ces moyens comprennent deux plaques 80, 82 agencées côte à côte dans un caisson 84. Chaque plaque 80, 82 comprend plusieurs plots 86, 88 perpendiculaires à la plaque et comportant chacun un doigt 90, 92 de support d'une tige. Chaque doigt 90, 92 s'étend depuis un plot 86, 88 dans un plan sensiblement parallèle à la plaque 80, 82. Les plots 86, 88 sont répartis sur la plaque 80, 82 et les doigts 90, 92 sont positionnés à une hauteur par rapport à la plaque 80, 82 de manière à ce que les points de contact des doigts 90, 92 d'une plaque 80, 82 avec une tige définissent un modèle tridimensionnel du profil du bord d'une pièce d'étalonnage.

Ainsi, les points de contact des doigts 90 de la plaque 80 forment un modèle tridimensionnel du profil du sommet 17 d'une aube 14 d'étalonnage et les points de contact des doigts 92 de la plaque 82 forment un modèle tridimensionnel du profil du bord d'attaque 19 d'une aube d'étalonnage.

Sur les figures 8 et 9, les différentes hauteurs des plots 86, 88 sont bien visibles. Les tiges 32, 66 sont recouvertes par un couvercle 94 de fermeture du caisson 84 en position de transport.

Ces plots 86, 88 permettent non seulement un transport des tiges précitées 32, 66 sans risque de déformation, mais également un contrôle tridimensionnel avant et après utilisation de la forme des tiges 32, 66, c'est-à-dire un contrôle du profil longitudinal de la tige. Ce contrôle est effectué en vérifiant que chaque doigt 90, 92 est bien en contact avec la tige 32, 66.

Un contrôle de la forme de la tige 32, 66 avant son utilisation permet de vérifier qu'elle possède bien la forme adéquate à la mesure de la déformation du bord à examiner. Un contrôle de la forme de la tige 32, 66 après extraction de celle-ci de l'intérieur de la turbomachine permet de vérifier que la tige 32, 66 n'a pas été déformée lors de son insertion et de son retrait de l'intérieur de la turbomachine. Cette double vérification de forme permet ainsi de confirmer que la mesure de déformation réalisée sur l'aube a été effectuée avec une tige 32, 66 dont la partie conformée 34, 68 avait bien la forme du bord à examiner.

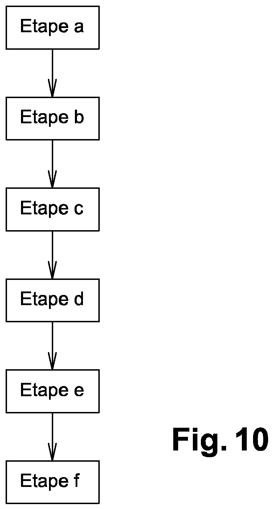

Selon l'invention, le contrôle non destructif est effectué selon les étapes successives indiquées en figure 10. Dans une première étape a, le profil de la tige est tout d'abord contrôlé en trois dimensions à l'aide de l'arrangement tridimensionnel des plots 86, 88. Dans une seconde étape b, la tige est engagée dans l'embout 54, 76 qui est inséré dans l'orifice d'endoscopie du carter de la turbomachine. Dans une troisième étape c, la partie conformée 34, 68 de la tige 32, 66 est positionnée sur la partie de la pièce à contrôler correspondant à la partie de la pièce d'étalonnage. A l'étape d, l'endoscope 24 est inséré à l'intérieur du carter de la turbomachine. A l'étape e, la déformation de la partie de la pièce à contrôler est mesurée à l'aide de l'endoscope 24, puis à l'étape f, l'opérateur retire la tige de l'intérieur de la turbomachine et effectue de nouveau l'étape a) pour vérifier qu'elle n'a pas subi de déformation durant son utilisation lors des étapes précédentes.

L'invention est particulièrement intéressante lorsque l'on utilise deux tiges 32, 66 en combinaison, dont l'une 32 comprend une partie conformée 34 selon un sommet d'aube 17, ce qui permet d'avoir une information précise sur l'étendue de la déformation le long du sommet 17 de l'aube 14 et l'autre 66 comprend une partie conformée 68 selon le bord d'attaque 19 de cette même aube 14, ce qui permet d'avoir une information précise sur l'étendue de la déformation le long du bord d'attaque 19 de l'aube. De cette manière, la précision des mesures est nettement améliorée par rapport à la précision de la mesure de la déformation avec la technique antérieure. Ces deux mesures de déformations sont plus précises du fait de l'utilisation d'une partie conformée 34, 68 selon le bord à examiner et intégrant des repères visuels de mesure de distance.

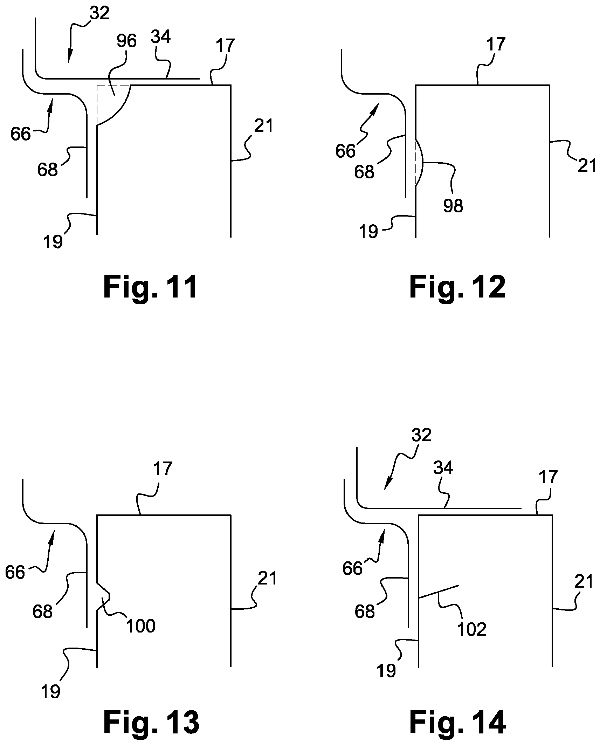

Si l'invention est particulièrement intéressante pour mesurer la déformation d'un coin amont d'aube, elle peut également être utilisée dans le cas où le coin amont d'aube 96 est arraché comme cela est représenté en figure 11. La mesure des dimensions de la partie arrachée 96 s'effectue de la même manière que ce qui a été décrit précédemment, en alignant la partie conformée 68 de la tige 66 suivant le bord d'attaque 19 de l'aube puis en alignant la partie conformée 34 de la tige 32 suivant le sommet d'aube 17.

Les bords d'attaque 19 des aubes peuvent également subir des impacts conduisant à la formation d'un renflement convexe 98 sur la face d'intrados de l'aube (figure 12) ou à un arrachement 100 d'une partie du bord d'attaque 19 de l'aube (figure 13). Dans ces deux cas, l'utilisation de la tige 66 dont une partie 68 est conformée selon le bord d'attaque 19 permet de déterminer la position du renflement ou de la partie arrachée 100 le long du bord d'attaque 19 et également de mesurer son étendue (figures 11 et 12).

L'invention est également applicable à la mesure de la déformation d'une partie autre qu'un bord d'une pièce. La déformation de la pièce peut par exemple consister en une fissure ou crique s'étendant sur la face d'intrados de l'aube depuis le bord d'attaque 19 de l'aube en direction du bord de fuite 21. L'utilisation de la tige 66 dont une partie 68 est conformée selon le bord d'attaque 19 permet de déterminer la position de la crique 102 le long du bord d'attaque 19 ainsi que son étendue le long du bord d'attaque 19. L'utilisation de la tige 32 dont une partie 34 est conformée selon le sommet d'aube 17 permet de mesurer l'étendue de la déformation entre le bord d'attaque 19 et le bord de fuite 21 (figure 14).

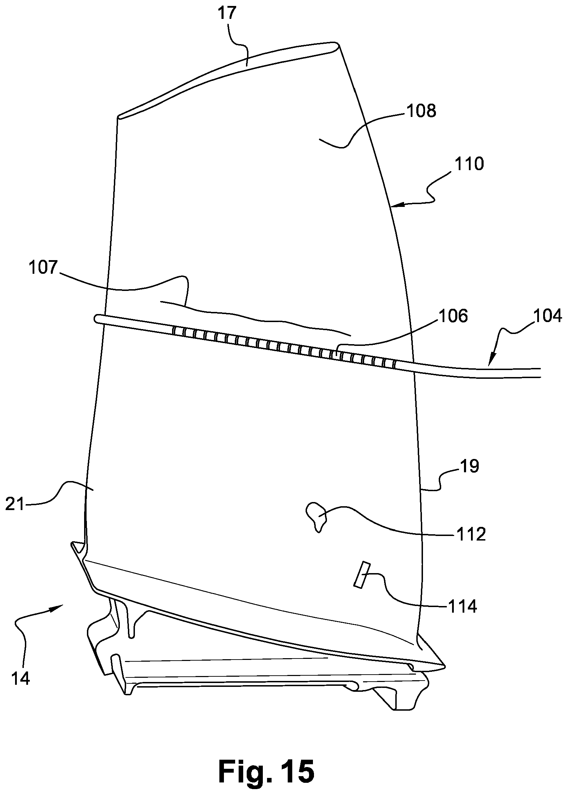

La mesure de l'étendue longitudinale d'une fissure 107 peut également se faire à l'aide d'une tige 104 ayant une partie conformée 106 selon le profil longitudinal de la face d'intrados 108 de la pale 110 de l'aube 14 pour une position donnée sur la hauteur de la pale 108. De cette manière, la partie conformée 106 est parfaitement alignée avec la face d'intrados, ce qui permet de disposer les repères visuels de la partie conformée 106 au plus près de la fissure et ainsi d'avoir une mesure précise de son étendue longitudinale (figure 15). Etant donné que le profil longitudinal de la face d'intrados 108 de l'aube 14 varie entre les extrémités interne et externe de la pale 110, il peut être souhaitable de disposer de plusieurs tiges, chacune ayant une partie conformée selon un profil longitudinal suivant la face d'intrados 108 de l'aube 14, ce profil étant déterminé pour une position donnée sur la hauteur de la pale 108.

Dans un exemple d'une séquence de mesure de l'étendue d'une fissure, l'opérateur utilise la tige 66 à partie conformée 68 selon le bord d'attaque 19 de l'aube pour déterminer la position radiale de la fissure sur la pale. De cette manière, l'opérateur peut ensuite choisir la tige 104 dont la partie est conformée selon le profil longitudinal de la pale à la position radiale de la fissure.

L'utilisation d'une tige ayant une partie conformée selon le profil longitudinal de la face d'intrados d'une aube peut s'avérer également utile pour mesurer l'étendue d'un dommage tel qu'un impact 112, 114 sur la face d'intrados 108 de la pale 110 (figure 15).

L'invention est également applicable à la mesure de la déformation d'un bord de fuite 21 d'une aube 14 ou d'un coin aval d'une aube 14 de rotor. Elle est également adaptée à la mesure de dommages (impact, fissure, déformation...) de la face d'extrados de l'aube ainsi que de dommages sur d'autres bords à l'intérieur de la turbomachine tel que les bords d'attaque ou les bords de fuite des aubes de redresseur 16.

Bien que l'invention ait été décrite en référence à des pièces d'un compresseur, elle est également applicable à d'autres sections d'une turbomachine et en particulier à des aubes fixes ou mobiles d'une turbine basse pression et haute pression agencée en aval d'une chambre de combustion.

## Revendications

1. Procédé de mesure de la déformation d'une pièce dans une turbomachine au moyen d'un dispositif comprenant une tige (32, 66) dont une partie (34, 68) a un profil qui correspond au profil d'une partie (17, 19) d'une pièce d'étalonnage de même type que la pièce examinée, ladite partie (34, 68) de la tige (32, 66) comprenant en outre des repères visuels (40, 42) de mesure de distance agencés sur sa longueur, **caractérisé en ce qu'**il consiste à :
a) contrôler le profil de la tige (32, 66) dans les trois dimensions à l'aide d'un modèle tridimensionnel du profil de la partie de la pièce d'étalonnage ;
b) engager la tige (32, 66) dans un orifice d'endoscopie d'un carter de la turbomachine (18) ;
c) positionner et fixer la partie conformée (34, 68) de la tige (32, 66) sur la partie de la pièce à contrôler correspondant à la partie de la pièce d'étalonnage
d) introduire un endoscope (24) à l'intérieur du carter de la turbomachine ;
e) mesurer la déformation de la partie de la pièce à contrôler à l'aide de l'endoscope (24), puis à
f) retirer la tige de l'intérieur de la turbomachine et effectuer de nouveau l'étape a) pour vérifier qu'elle n'a pas subi de déformation lors de l'étape b).

2. Procédé selon la revendication 1, **caractérisé en ce que**, la pièce étant une aube (14) d'un rotor dans une turbomachine, le procédé est exécuté successivement sur deux parties de l'aube dont l'une est le bord d'attaque (19) et l'autre le sommet (17) de l'aube (14).

3. Procédé selon la revendication 1 ou 2, **caractérisé en ce que**, la pièce étant une aube de rotor dans une turbomachine et la tige étant conformée selon le bord d'attaque de l'aube, le rotor est tourné jusqu'à ce qu'un rebord de l'extrémité libre de la partie conformée de la tige vienne au contact d'une face d'extrados de l'aube de manière à aligner la partie conformée de la tige avec le bord d'attaque de l'aube.

4. Procédé selon l'une des revendications précédentes, **caractérisé en ce que** les repères visuels de mesure de distance (40, 42) comprennent des graduations régulièrement réparties sur la longueur de ladite partie de tige (34, 68).

5. Procédé selon la revendication 4, **caractérisé en ce que** chaque graduation est réalisée sous la forme d'un trait coloré dont la couleur diffère de celles des traits colorés adjacents.

6. Procédé selon l'une des revendications précédentes, **caractérisé en ce que** le dispositif comprend des moyens de fixation et de positionnement de ladite partie (34, 68) de tige en position fixe et alignée avec la partie (17, 19) de la pièce examinée (14) correspondant à la partie de la pièce d'étalonnage.

7. Procédé selon la revendication 6, **caractérisé en ce que** la pièce étant une aube de rotor (14) agencée à l'intérieur d'un carter (18) de turbomachine, les moyens de fixation et de positionnement comprennent un embout (54, 76) engagé sur l'extrémité de la tige (32, 66) opposée à la partie (34, 68) conformée de la tige (32, 66), l'embout (54, 76) étant fixé dans l'orifice d'endoscopie du carter de la turbomachine et comprenant un orifice de passage de l'endoscope (24).

8. Procédé selon la revendication 6 ou 7, **caractérisé en ce que** les moyens de positionnement comprennent un rebord (60, 78) agencé à l'extrémité libre de la partie conformée (34, 68) de la tige (32, 66) et servant de butée de positionnement de la tige (32, 66) sur la pièce examinée (14).

9. Procédé selon l'une des revendications précédentes, **caractérisé en ce que** la partie conformée (34, 68) est raccordée à une seconde partie de tige en L.

10. Procédé selon la revendication 9, **caractérisé en ce que** la partie conformée (34) de la tige (32) suit le profil du sommet (17) d'une aube de rotor (14) et est inclinée par rapport à la branche (38) à laquelle elle est raccordée.

11. Procédé selon la revendication 9, **caractérisé en ce que** la partie conformée (68) de la tige suit le profil du bord d'attaque (19) d'une aube de rotor et s'étend sensiblement perpendiculairement à la branche (72) du L à laquelle elle est raccordée et dans une direction opposée à l'autre branche (70) du L.

## Patentansprüche

1. Verfahren zum Messen der Verformung eines Bauteils in einer Turbomaschine bzw. einem Turbotriebwerk mittels einer Vorrichtung, die einen Schaft (32, 66) enthält, von dem ein Abschnitt (34, 68) ein Profil aufweist, das dem Profil eines Abschnitts (17, 19) eines Kalibrierstücks des gleichen Typs wie das Prüfteil entspricht, wobei der Abschnitt (34, 68) des Schaftes (32, 66) ferner visuelle Entfernungsmessmarker (40, 42) enthält, die über seiner Länge angeordnet sind,
**dadurch gekennzeichnet, dass**
es aus Folgendem besteht:
a) Überprüfen des Profils des Schaftes (32, 66) in den drei Dimensionen anhand eines dreidimensionalen Modells des Profils des Abschnitts des Kalibrierstücks,
b) Einsetzen des Schafts (32, 66) in eine Endoskopieöffnung eines Gehäuses (18) der Turbomaschine bzw. des Turbotriebwerks;
c) Positionieren und Befestigen des Formabschnitts (34, 68) des Schaftes (32, 66) an den Abschnitt des zu prüfenden Bauteils, der dem Abschnitt des Kalibrierstücks entspricht,
d) Einführen eines Endoskops (24) in das Innere des Gehäuses der Turbomaschine bzw. des Turbotriebwerks,
e) Messen der Verformung des Abschnitts des zu prüfenden Bauteils mit Hilfe des Endoskops (24), dann
f) Entfernen des Schafts aus dem Inneren der Turbomaschine bzw. des Turbotriebwerks und erneutes Ausführen von Schritt a), um sicherzustellen, dass er keine Verformung in Schritt b) erfahren hat.

2. Verfahren nach Anspruch 1,
**dadurch gekennzeichnet, dass**
es sich bei dem Bauteil um eine Schaufel (14) eines Rotors in einer Turbomaschine bzw. einem Turbotriebwerk handelt und das Verfahren nacheinander an zwei Abschnitten der Schaufel durchgeführt wird, von denen einer die Vorderkante (19) und der andere die Oberseite (17) der Schaufel (14) ist.

3. Verfahren nach Anspruch 1 oder 2,
**dadurch gekennzeichnet, dass**
es sich bei dem Bauteil um eine Rotorschaufel in einer Turbomaschine bzw. einem Turbotriebwerk handelt und der Schaft entsprechend der Vorderkante der Schaufel geformt ist, wobei der Rotor soweit verdreht wird, bis eine Randleiste des freien Endes des Formabschnitts des Schafts mit einer Außenseite der Schaufel in Kontakt gelangt, so dass der Formabschnitt des Schafts mit der Vorderkante der Schaufel ausgerichtet ist.

4. Verfahren nach einem der vorangehenden Ansprüche,
**dadurch gekennzeichnet, dass**
die visuellen Entfernungsmessmarker (40, 42) Unterteilungen aufweisen, die gleichmäßig über die Länge des Schaftabschnitts (34, 68) verteilt sind.

5. Verfahren nach Anspruch 4,
**dadurch gekennzeichnet, dass**
jede Unterteilung in Form eines farbigen Strichs ausgeführt ist, dessen Farbe sich von der der benachbarten farbigen Striche unterscheidet.

6. Verfahren nach einem der vorangehenden Ansprüche,
**dadurch gekennzeichnet, dass**
die Vorrichtung Mittel zum Fixieren und Positionieren des Schaftabschnitts (34, 68) in einer festen und mit dem Abschnitt (17, 19) des Prüfbauteils (14) ausgerichteten Position enthält, welcher dem Abschnitt des Kalibrierstücks entspricht.

7. Verfahren nach Anspruch 6,
**dadurch gekennzeichnet, dass**
das Bauteil eine Rotorschaufel (14) ist, die innerhalb eines Gehäuses (18) der Turbomaschine bzw. des Turbotriebwerks angeordnet ist, wobei die Befestigungs- und Positionierungsmittel ein Endstück (54, 76) aufweisen, das an dem Ende des Schafts (32, 66) eingreift, das dem Formabschnitt (34, 68) des Schafts (32, 66) entgegengesetzt ist, wobei das Endstück (54, 76) in der Endoskopieöffnung des Gehäuses der Turbomaschine bzw. des Turbotriebwerks befestigt ist und eine Durchgangsöffnung für das Endoskop (24) aufweist.

8. Verfahren nach Anspruch 6 oder 7,
**dadurch gekennzeichnet, dass**
die Positionierungsmittel eine Randleiste (60, 78) enthalten, die am freien Ende des Formabschnitts (34, 68) des Schafts (32, 66) angeordnet ist und als Anschlag zur Positionierung des Schafts (32, 66) an dem Prüfbauteil (14) dient.

9. Verfahren nach einem der vorangehenden Ansprüche,
**dadurch gekennzeichnet, dass**
der Formabschnitt (34, 68) mit einem L-förmigen zweiten Schaftabschnitt verbunden ist.

10. Verfahren nach Anspruch 9,
**dadurch gekennzeichnet, dass**
der Formabschnitt (34) des Schafts (32) dem Profil der Oberseite (17) einer Rotorschaufel (14) folgt und bezüglich des Schenkels (38) geneigt verläuft, mit dem er verbunden ist.

11. Verfahren nach Anspruch 9,
**dadurch gekennzeichnet, dass**
der Formabschnitt (68) des Schafts dem Profil der Vorderkante (19) einer Rotorschaufel folgt und sich im Wesentlichen senkrecht zu dem Schenkel (72) der L-Form, mit dem er verbunden ist, und in einer dem anderen Schenkel (70) der L-Form entgegengesetzten Richtung erstreckt.

## Claims

1. A method of measuring the deformation of a part in a turbine engine by means of a device comprising a rod (32, 66) having a portion (34, 68) with a profile that corresponds to the profile of a portion (17, 19) of a calibration part of the same type as the part under examination, said portion (34, 68) of the rod (32, 66) further including visible marks (40, 42) for remote measurement arranged along its length, **characterized in that** it consists:
a) inspecting the profile of the rod (32, 66) in three dimensions with the help of a three-dimensional model of the profile of the portion of the calibration part;
b) engaging the rod (32, 66) in an endoscope orifice in a casing of the engine (18);
c) positioning and fastening the shaped portion (34, 68) of the rod (32, 66) on the portion of the part for inspection that corresponds to the portion of the calibration part;
d) introducing an endoscope (24) inside the casing of the engine;
e) measuring the deformation of the portion of the part for inspection with the help of the endoscope (24), and then
f) withdrawing the rod from the inside of the engine and performing a step a) once more in order to verify that the rod has not been subjected to deformation during step b).

2. A method according to claim 1, **characterized in that** when the part is a blade (14) of a rotor in an engine, the method is performed on two portions of the blade in succession, one of which portions is the leading edge (19) and the other of which portions is the tip (17) of the blade (14).

3. A method according to claim 1 or claim 2, **characterized in that**, when the part is a rotor blade in an engine and the rod is shaped to match the leading edge of the blade, the rotor is turned until a rim of the free end of the shaped portion of the rod comes into contact with a suction side face of the blade so as to align the shaped portion of the rod with the leading edge of the blade.

4. A method according to any preceding claim, **characterized in that** the visible marks (40, 42) for remote measurement comprise graduations that are regularly distributed along the length of said rod portion (34, 68).

5. A method according to claim 4, **characterized in that** each graduation is made in the form of a colored line with the color of each line differing from the colors of adjacent colored lines.

6. A method according to any preceding claim, **characterized in that** the device includes fastening and positioning means for fastening and positioning said rod portion (34, 68) in a stationary position in alignment with the portion (17, 19) of the part (14) under examination that corresponds to the portion of the calibration part.

7. A method according to claim 6, **characterized in that**, when the part is a rotor blade (14) arranged inside a casing (18) of a turbine engine, the fastening and positioning means comprise an endpiece (54, 76) engaged on the end of the rod (32, 66) remote from the shaped portion (34, 68) of the rod (32, 66), the endpiece (54, 76) being fastened in the endoscope orifice in the casing of the engine and including an orifice for passing the endoscope (24).

8. A method according to claim 6 or claim 7, **characterized in that** the positioning means include a rim (60, 78) arranged at the free end of the shaped portion (34, 68) of the rod (32, 66) and serving as an abutment for positioning the rod (32, 66) on the part (14) under examination.

9. A method according to any preceding claim, **characterized in that** the shaped portion (34, 68) is connected to a second portion of the rod that is L-shaped.

10. A method according to claim 9, **characterized in that** the shaped portion (34) of the rod (32) follows the profile of the tip (17) of a rotor blade (14) and is inclined relative to the branch (38) to which it is connected.

11. A method according to claim 9, **characterized in that** the shaped portion (68) of the rod follows the profile of the leading edge (19) of a rotor blade and it extends substantially perpendicularly to the branch (72) of the L-shape to which it is connected and in a direction going away from the other branch (70) of the L shape.
